Europäisches Patentamt

European Patent Office

Office européen des brevets

(19)

(11) Publication number: **0 460 916 A2**

# (12) EUROPEAN PATENT APPLICATION

(21) Application number: **91305042.3**

(22) Date of filing: **04.06.91**

(51) Int. Cl.⁵: **G11B 11/10, G11B 7/00, G11B 7/013**

(30) Priority: **04.06.90 US 532753**

(43) Date of publication of application:
**11.12.91 Bulletin 91/50**

(84) Designated Contracting States:
**DE FR GB**

(71) Applicant: **International Business Machines Corporation**
**Old Orchard Road**
**Armonk, N.Y. 10504 (US)**

(72) Inventor: **Menon, Jaishankar Moothedath**
**6017 Montoro Drive**
**San Jose, CA 95120 (US)**
Inventor: **Onton, Aare**
**14690 Piloha Avenue**
**Saratoga, CA 95070 (US)**
Inventor: **Shomler, Robert Wesley**
**17015 Piedmont Court**
**Morgan Hill, CA 95037 (US)**

(74) Representative: **Bailey, Geoffrey Alan et al**
**IBM United Kingdom Limited Intellectual Property Department Hursley Park**
**Winchester Hampshire SO21 2JN (GB)**

(54) **Format and method for recording digital data on record disks with a pre-erasure need to save extra rotations.**

(57)  A storage medium, such as a rotatable disk having a signal-storing magneto-optic layer, stores a large plurality of data records in a plurality of tracks. The erasure status of portions of each track is indicated by an erasure indicator (E) located between two predetermined data records in each track. The erasure indicator indicates the erased status between a last data record in each track and the end of the track when moving in a direction of recording signals on the storage medium. The erasure indication points to an area of the track separated from the erasure indicator by the last data record of the track, i.e. a predetermined portion of the track remote from the erasure indicator. The recorder operative with a magneto-optic storage medium requires that the area of the storage medium to be written to be erased before writing or recording can occur; this requirement is termed "pre-write erasure" requirement.

| 15 16 17 | 18 | 19 | 20 | 23 | 25 | 26 27 | 28 |

| G | HA | G | E | G | RO-C | G | RO-D | G | E | G | RI-C | G | RI-D |

| 30 | 31 | 33 | 34 |

| G | E | R2 | · ʹ · | E | G | RN-I-C | G | RN-I-D | ERASED ? |

FIG. 2

EP 0 460 916 A2

The present invention relates to recording digital signals on a magneto-optic recording medium, such as a rotatable disk.

In information handling systems, retentive data recording has been achieved primarily in magnetic devices, such as rotating magnetic disks and magnetic tapes. Other forms of record media are also available, such as write-once optical media and rewriteable optical media, usually magneto-optic media. Optical media are becoming more prevalent for storing data, primarily because of greater capacities and possibly lower costs than currently found in magnetic recording. It is preferred to use rewriteable media for many reasons, including updating the recorded data to a new version or generation of the data without using additional media. This preference indicates a growing importance of rewriteable optical media. One current disadvantage of rewriteable optical media is that the area to be updated or re-recorded must be separately erased before new or replacement data can be recorded. Such a requirement may result in more disk rotations for updating a recorded area than used in magnetic recording. Such extra rotations impose a severe degradation of performance. Another problem associated with pre-erasure requirements of current magneto optic recorders is space management for the media plus having information about the erased state of the medium. With such additional information readily available, degradation of performance by a pre-erasure requirement can be alleviated.

A part of pre-erasure requirements of magneto-optic recorders are addressed in EP-0328240-A. This document shows listing the status of entire tracks in control tables for use in allocation and deallocation procedures related to such status listings. It is desired to provide controls for allocated tracks which may have erased or non-erased status in unused areas of the tracks. One example is that a track is re-allocated but not erased. Such a deallocated track or area can be used for recording new or replacement data without erasing the entirety of the track. It is useful to know the status of such portion of the allocated track. Such information is preferably stored on the medium with the recorded data in an advantageous location for enhancing performance.

It is also desired to use formats currently used in magnetic recording. This usage enables continued usage of programming designed to operate magnetic recording devices, a substantial investment which is best preserved and taken advantage of. An example of such a format is described in a book "Introduction to IBM Direct Access Storage Devices" by Marilyn Bohl, Science Research Associates, 1981, pages 72 to 77. Bohl describes the Count, Key Data (CKD) format used in many IBM disk drives. It is desired to apply the CKD and derivative formats to optical media. The present invention provides methods and structures for efficiently applying CKD formats to optical media, particularly that media which has a pre-erasure requirement before recording signals on such media.

Pages 27-29 and 126 of Bohl, supra, describe a fixed-block variant of CKD. A count area and a physical record or block constitute an addressable area within a track. The total area is of fixed size, i.e. always occupies a fixed circumferential length of a track. As usual, gaps delineate the successively recorded areas in each of the tracks. Each block may store a plurality of logical records. This arrangement is also termed fixed block architecture (FBA) disks or recording media.

Other forms of fixed block recording formats are also used. In DOS (a disk operating system which is extensively used not only in medium sized computers but also in so-called personal computers), a diskette is soft-sectored into 8 or 9 sectors per track on a 3.5 inch or 5.25 inch diameter diskette. Each sector contains an identification area and a data recording area. The identification area typically will contain a sector address and other control fields, which may include defect information about the sector, and the like. Yet other disks, usable with DOS and other operating systems, are so-called hard-sectored disks. In such disks, the sector identification portion of each sector is embossed, or otherwise permanently installed, in the disk. Optical disks in current use are often hard sectored by molding the sector identifications into the disk at time of its manufacture. The present invention is also usable to advantage for such hard-sectored disks. US patent 4,814,903 refers to such hard-sectored optical disks and shows one format for such disks. In all of the above-referred to formats, a gap is usually provided between successive data storing areas of the track. It is believed that the greatest advantage is for CKD formatted disks which are usually the disks used in the higher performance disk drives.

According to the present invention there is provided data storage apparatus having means for storing data as a plurality of data areas on a storage medium, the medium requiring erasure of any data previously stored on a data area before further data is written to that area, characterised by means for storing, on the medium, a data item associated with one or more of the data areas, indicating whether any previously recorded data has already been erased from that area or areas.

The present invention also provides a method of operating data storage apparatus having means for storing data as a plurality of data areas on a storage medium, the medium requiring erasure of any data previously stored on a data area before further data is written to that area, comprising the step of storing, on the medium, a data item associated with one or more of the data areas, indicating whether any previ-

2

ously recorded data has already been erased from that area or areas.

The invention also provides a data storage medium requiring erasure of any data previously stored on a data area before further data is written to that area, characterised by a data item stored on the medium and associated with one or more of the data areas, indicating whether any previously recorded data has already been erased from that area or areas.

Further aspects of the invention are disclosed in the attached claims.

In accordance with the invention, track erasure indicators are inserted into each track for indicating the erasure status of predetermined portions of a track, preferably addressable portions of a track. Such predetermined portions are less than the extent of a given track or circumvolution of a disk. One erasure indicator is placed between two records for indicating the erasure status of the track remote from the two records. In one embodiment, each track has an index mark, the two records are located adjacent the index mark or line and the erasure indicator indicates the erased status of the track portion not occupied by records recorded in such track taken in the direction of relative motion of the record member with respect to a transducer or laser beam used with the disk. In a second embodiment of the invention, an erasure indicator is located between all records in each track, all erasure indicators in each track indicate a non-erased state excepting the erasure indicator between the penultimate and ultimate records which indicates the actual erasure state of a portion of the track not occupied by currently valid records. The ultimate record is the last record recorded on a track, i.e. the record circumferentially furthest from the index mark of such track.

In at least a preferred embodiment the invention provides machine operation controls for record media having pre-erasure recording requirements which facilitate controlling usage of such media, and in particular applies to magneto-optic media.

In order that the invention may be fully understood, preferred embodiments thereof will now be described, by way of example only, with reference to the accompanying drawings in which:

Fig. 1 diagrammatically shows a data storage disk and a recorder in which the present invention may be employed;

Fig. 2 shows a format used on the Fig. 1 illustrated disk according to the present invention;

Fig. 3. is a simplified flow chart showing machine operations for formatting a Fig. 1 illustrated disk;

Fig. 4. is a simplified flow chart showing machine operations for deallocating an allocated track of he Fig. 1 illustrated disk;

Fig. 5 is a simplified flow chart showing first machine operations for adding one record to a formatted track of the Fig. 1 illustrated disk;

Fig. 6 is a simplified flow chart showing second machine operations for appending one or more records to records already recorded on a track of the Fig. 1 illustrated disk;

Fig. 7 diagrammatically shows an alternate index mark arrangement for the Fig. 1 illustrated disk; and

Fig. 8 diagrammatically shows reading recorded data while erasing such data on a track of the Fig. 1 illustrated disk.

Referring now more particularly to the appended drawing, like numerals indicate like parts and structural features in the various figures. Magneto-optic recording disk 10 has a recording area 11 consisting of a large plurality of data storing tracks (not separately shown). For CKD disks, a single radial track index line 12 (which can be embossed, molded or magnetically recorded) extends across recording area 11. This index line identifies the beginning (BOT) and end (EOT) of each of the tracks. A transducer arm assembly 13 has the usual optics, including an objective or focussing lens at its distal end. Circle 13M represents polarity reversible means for providing a magnetic bias or steering field in disk 10 for writing and erasing, as is known. One magnetic polarity is for erasure and an opposite magnetic polarity is for writing. Other portions 14 represent the remainder portions of an optical disk drive, as is known, and schematically illustrated in Kulakowski, supra. When the above-mentioned FBA disks are employed, sector identifying marks extend radially of the recording area 11 to denote a plurality of equal-sized data storing sectors on a data storing disk. While the present invention can be practised with either type of formatting, it is preferred that the CKD format be used because of increased areal efficiency.

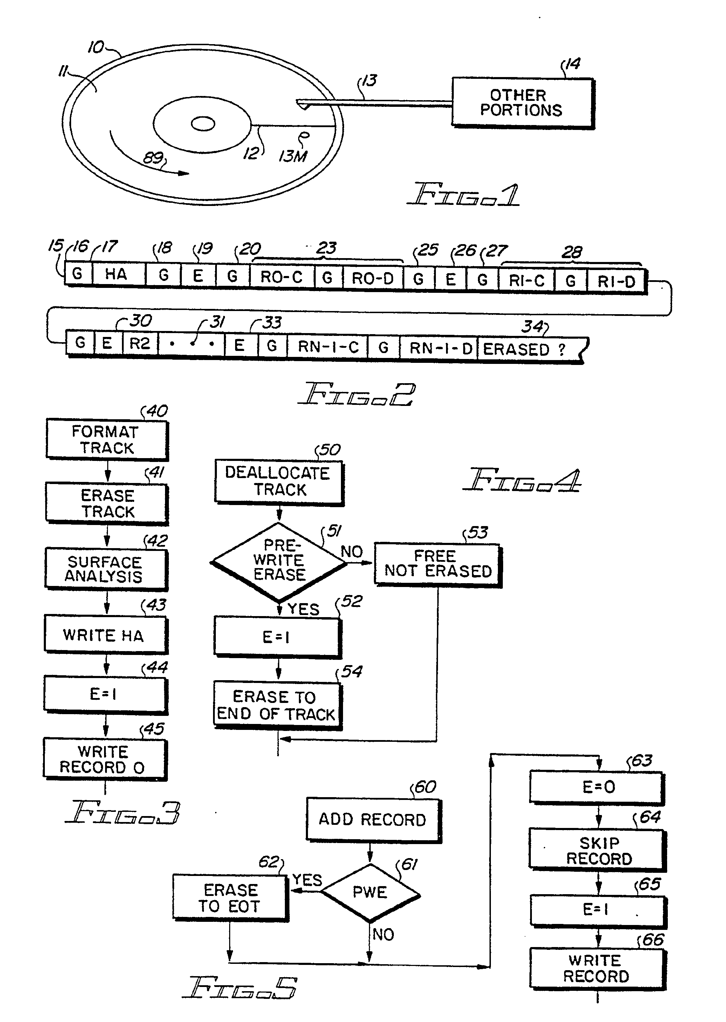

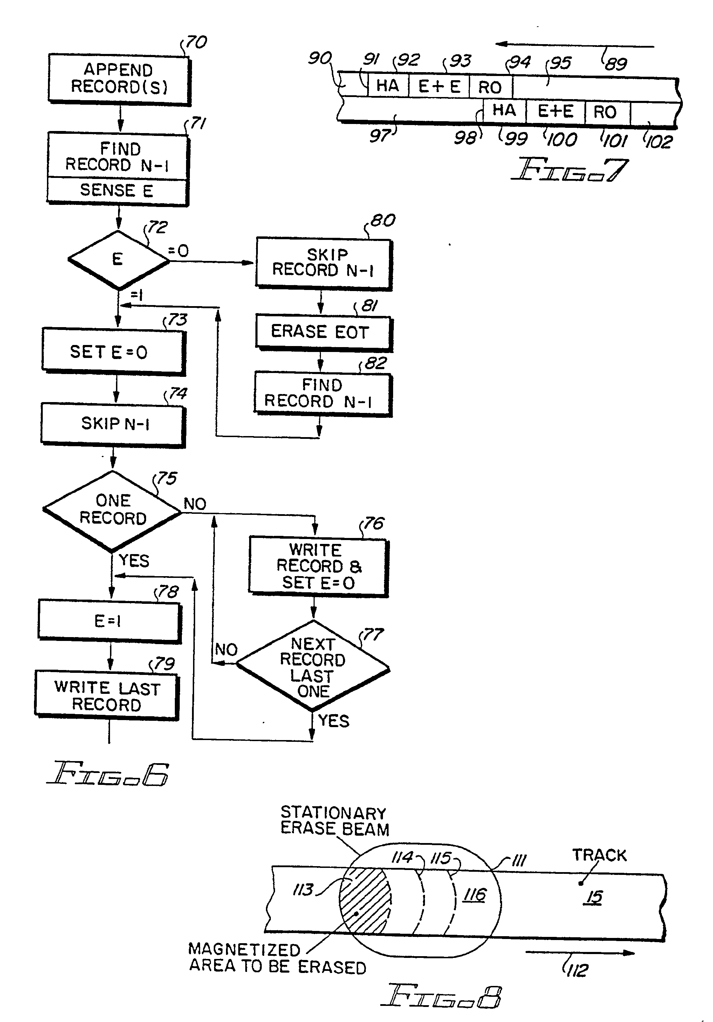

Control indicia are interposed between at least two records, blocks or sectors of data for indicating the erased state of the respective tracks beyond the adjacent record, block or sector to be next scanned by a transducer of head assembly 13. Fig. 2 illustrates a single CKD formatted track 15, in which the index mark 12 denotes the beginning of track 15. An initial gap 16 separates index mark or line 12 from the first record 17, the Home Address record HA described by Bohl, supra, in Fig. 4-1 on page 73. Gap 18 separates HA 17 from control indicia E 19, added to the Bohl et al described format, as will be later detailed. Gap 20 separates control indicia E 19 from the next Bohl et al described record R0 23 (record 0) as used in the CKD format. Record R0 continues to be a control record as used in the CKD format. Record R0 consist of count field R0-C, a gap, and control data field R0-D, all as used in current count-data, CKD or related and derivative formats. Gap 29 sepa= rates record R0 from a second control indicia E 26 which is used as later described. Gap 27 likewise separates the second control indicia E 26 from the first user data containing record 28, also denominated as R1. Record 28, as all records in CKD have the same format; the present invention adding the E indicia between adjacent ones of the CKD formatted records. E indicia 30 and 33 represent the last two E indicia recording in track 15; the last E indicia 33 signifies the erased status of area 34, that portion of track 15 lying between the last record RN-1 and index line 12.

An advantage of the present embodiment found when updating track 15, as by adding records in area 34. Sensing the last E indicia 33 before scanning record RN-1 enables other portions 14 to determine whether area 34 is erased. This action enables, if area 34 is erased, recording without an intervening pre-write erasing operation (saves one disk rotation in most data recording operations, as will become apparent), or if area 34 is not erased to perform a pre-write erasure. When area 34 is erased, the E indicia enable other portions 14 to avoid an additional rotation usually required for pre-write erasure. Keeping the erased condition indicators on the disk 10 provides a simple low-cost erase indications for a multiplicity of data-storing tracks.

The E indicia 19, 26, 30 and 33 may consist of any signal pattern that is reliably sensible. Such a signal pattern can be an erased area in any of the E indicia locations for indicating either a binary 0 or binary 1, as determined by a designer. The indicia control indications follow the rules that if the track area beyond the next record to be scanned is erased (whether in a current track or another track), then the value of the indicia is true (area erased) indicated in the present invention by binary 1. When the area of the track beyond the next record to be scanned is not erased, then the E indicia indicates false, herein represented by a binary 0. In Fig. 2, the E indicia 19, 26 and 30 are all "0" because records are recorded after the next scanned record, respectively. The E indicia 33 is binary 0 when the area 34 following record RN-1 in the current direction of relative motion of disk 10 is erased and is a binary 1 when such following area is not erased.

In a simplified embodiment, only E indicia 19 is provided in each track. In this aspect, E indicia 19 is a binary 0 whenever area 34 is not erased or its erasure status is unknown and is a binary 1 whenever area 34 is known to be erased. In a later described embodiment, the E indicia 19 is an erased area for indicating a binary 1.

The arrangements described above for CKD are equally applicable to FBA disks, whether soft sectored or hard sectored. A variation applicable to FBA is that each E indicia signifies the erased status only for the sector or fixed block data storing area just beyond the next record to be scanned. For example, in Fig. 2, E indicia 19 signifies the erased status of record storing area denominated as record 28 just beyond next scanned record 23. Timing considerations in record area accessing may suggest other variations of the erasure indications used in accordance with the present invention. Another factor in selecting the E indicia location is the time required to reverse the magnetic bias field direction between an erasing polarity and a writing or recording polarity. The shorter the time to access and reverse magnetic polarity, the closer the E indicia can be placed to the pointed to sector, block or area.

Although it is preferred that the control using the E indicia be placed between adjacent records, no limitation thereto is intended. The E indicia can be included in the count field, in sector ID portions of FBA disks, and the like.

Fig. 3 illustrates the machine operations effected for formatting a CKD track on a disk. At step 40 a format track command is to be executed under control of other portions 14, is effected by microprogramming being executed by a microprocessor (not shown) of other portions 14. At step 41, the traclk is erased using known techniques. Then a surface analysis step 42 is performed in a known manner for identifying defect locations in the track and for effecting known defect skipping in CKD formatted tracks. Then at step 43, home address record HA is recorded (including recording gaps) followed by recording E indicia 19 in step 44 to indicate a binary 1. Then record R0 is written at step 45. Now the track is formatted for receiving user data in records number R1 and higher.

Fig. 4 illustrates the machine operations for deallocating a track. Allocation of a CKD track is known and follows usual procedures. The Fig. 3 illustrated formatting can occur upon the first allocation of the respective track or can be performed before allocations during idle times of the Fig. 1 illustrated storage apparatus. In any event, a deallocate track command is entered at step 50, as by calling a microprogram routine (not shown) in other portions 1.4. Then, at step 51, other portions 14 determined whether or not to pre-write erase the just deallocated track. If not, then the just deallocated track is identified as a free but not erased track: see Kulakowski et al, supra for space management associated with such an operation. If the track is to be pre-write erased at this time, then the track is accessed, the E indicia 19 is changed from indicating a binary 0 (records are on the track) to a binary 1 for indicating pre-write erasure. Then at step 54, the track is erased from the end of record R0 23, beginning with gap 25 to EOT at index line 12. Now area 34 extends from R0 to index line 12. In an alternate procedure providing greater system integrity, the track is first erased as above described; upon completion of the erasure, E indicia 19 is set to indicate binary 0. Either procedure is acceptable; for maximal system integrity the alternate procedure should be used.

Fig. 5 is a simplified chart of machine operations usable for adding one record to existing recording in one track. An add record command begins at step 60. At step 61, other portions 14 determine whether or not a pre-write erase (PWE) is included with the write command. If yes, then at step 62 the accessed track to be written to is erased from the end of the last record N-1 in the track to the index line 12 (end of the track or EOT). This partial-track erasure can be effected by a known command "Perform Subsystem Function" which commands a peripheral controller that a designeated track is to be erased from the last record upto the index line 12. Such an erasure from a last written record in a track to the index line 12 has also been termed a "data security erase". Machine operations from step 61 without a PWE required and from erase step 62 joint step 63 to reset the E indicia preceding the last current record to binary 0. This action indicates that the area just beyond the current last record N-1 is no longer erased, i.e. one record has been added. The last record N-1 is skipped at machine step 65, followed by writing a new E indicia for the newly added record with E being equal to binary 1 (the area after the new record is erased). Finally, the record is written to the track at machine step 66 and now becomes the last record on the track.

It should be remembered that before writing can occur in most magneto optic recorders, the area has to be pre-write erased. If the above-described set of operations is to occur, this means that the E=0 value (false) may have to be an erased area between two gaps. Some alternatives are disclosed with respect to the Fig. 8 description. Appending a plurality of records when using the Fig. 2 illustrated format is shown by the machine operations chart of Fig. 6. The machine operations begin at step 70 whereat other portions 14 institute the machine operations. At step 71, accessing the addressed track and obtaining the usual rotational position occurs by finding the last record N-1 currently recorded in the track. This record number is usually known enabling other portions 14 to efficiently access the track using known techniques. The track access occurs before the last E indicia 33 is encountered by the transducer. The true-false indication of E indicia 33 is sensed, as later described. At machine step 72, if the value of indicia 33 is binary 1, then area 34 has been pre-write erased. In this instance, at step 73 the E bit is set to binary 0. Then at step 74 the next record N-1 is skipped. At step 75, it is determined whether only one or more than one record is to be appended after the current last record N-1. If one record is to be recorded, then at step 78 the E bit (corresponding to E bit 33 of Fig. 2), is set to binary 1, i.e. area 34 has been prewrite erased. The one record, to be the last record on the track, is written at step 79. The write procedure is now complete.

If at step 75, it is determined that more than one record is to be appended to the current last record, then a machine operations loop of steps 76 and 77 is repeatedly performed until a last record is yet to be recorded. At step 76, the E bit is set to binary 0 indicating more than one record exists beyond the E bit and a next record is recorded. At step 77, other portions 14 determine whether or not the next record to be recorded is the last record. If not the loop 76-77 is repeated. If the next record is to be the last record, then steps 78 and 79, above-described are performed to complete the recording operation.

If back at step 72, the value of the E indicia 33 is binary 0, then the area 34 is currently not pre-write erased. Thereupon, at step 80 the record N-1 is skipped. While the record is being skipped, other portions 12 switch the magnetic bias field represented by circle 13M of Fig. 1 to the erase polarity. At step 81 the track is erased beginning at the end of the record N-1 to EOT at index line 12. Now writing the records to be appended can ensue. At step 82 rotational position of record N-1 is acquired and skipped. Then, steps 73 et seq are performed as described above.

Fig. 7 illustrates circumferential spacing of track indexes (BOT and EOT indicators) from track to track to enable switching from one track to an adjacent track when format writing a plurality of adjacent tracks successively. This description assumes that read while erase/write as described for Fig. 8 is not being used. This procedure is particularly useful when only E indicia 19 are used. In the Fig. 7 arrangement, the index (BOT and EOT), of each track is circumferentially offset from the indexes of radially adjacent tracks to enable switching the laser beam from one track to an adjacent track for reading the E indicium of the adjacent track, then switching back to the first track. In this arrangement, the E indicium on one track signifies the pre-write erasure of an adjacent track which has an index scanned by the transducer assembly 13 before the assembly 13 scans the index in the one track. Disk 10 is moving in the direction of arrow 89 with respect to transducer assembly 13 (Fig. 1). For simplicity, the gaps between fields as shown in Bohl, supra, are omitted. The E indicia 93 immediately following HA 92 and index 91 of track 90 describes the pre-write erasure status of an adjacent track (not shown) having its index circumferentially displaced on the disk 10 a predetermined distance in the direction of arrow 89. Similarly, adjacent track 97 has its index 98 circumferentially displaced from index 91 to allow switching the transducer assembly 13 laser beam from track 90 after reading HA 92 to read HA 99 and E indicium 100, then switch back to track 90. Then, track 90 is written using the usual Format Write command (Bohl, supra). This procedure is repeatable for all adjacent tracks to be subsequently format written. Records R0 94 and 101 are written as above described while areas 95 and 102 both correspond to the area 34 of Fig. 2, respectively for tracks 90 and 97. The circumferential displacement is readily ascertained by measure elapsed time for switching the laser beam from one track to an adjacent track and the rotational speed of disk 10.

Another application for the circumferential displacement of indexes for adjacent tracks is to enable continuous scanning of the HA, E indicia, and R0 of a series of tracks. Such a continuous scan enables ascertaining pre-write erasure status of a plurality of tracks with a minimal number of disk rotations. The symbol "E + E" in E indicia 93 and 100 indicates that a plurality of E indicia may be included between circumferentially adjacent records in a tracks, such as between HA and R0 of such tracks. One of the E indicia can indicate the pre-write erasure for an adjacent track while a second one of the E indicia can indicate the pre-write erasure status of the current track. Such plural indications can be used with a single index line 12 as well as with circumferentially displaced indexes.

When using the erased condition to indicate binary 1, i.e. the area 34 is erased, the value of the last E indicia 33 can be read to verify it being a binary 0 or 1 by reading such E indicia while erasing it. Fig. 8 illustrates how this read while erase operation is effected. An erasing laser beam 111 emitted by head assembly 13 in a known manner impinges on magneto-optic track 15 which is moving under the beam 111 in the direction of arrow 112. Erasure is effected by heating the area of track 15 under beam 111 to be above the Curie temperature while a biasing magnetic field causes the magnetic remanence occurring as the area cools to assume the polarity of the bias field. Such heating has a finite delay; that is area 116 which is the leading edge portion of erasing beam 111 is below the Curie temperature; thus any light reflected from track 15 still indicates the previous magnetic remanence in accordance with the Kerr effect. Detecting the rotation of light polarization indicates the previous state of the remanent magnetization in area 116. Erasure occurs in the shaded area 113 with the temperature of the area under erasure beam 111 increasing toward the Curie tempera= ture as indicated by dashed lines 114 and 115. The track temperature cools after the track has passed under the erasing beam 111. The above-described procedure also enables writing a long area of non-erasure tone(s), one tone frequency signifying a binary 0 and a second tone frequency signifying a binary 1.

While the invention has been particularly shown and described with reference to preferred embodiments thereof, it will be understood by those skilled in the art that various changes in form and details may be made therein without departing from the scope of the invention.

## Claims

1. Data storage apparatus having means for storing data as a plurality of data areas on a storage medium, the medium requiring erasure of any data previously stored on a data area before further data is written to that area,

   characterised by

   means for storing, on the medium, a data item associated with one or more of the data areas, indicating whether any previously recorded data has already been erased from that area or areas.

2. A method of operating data storage apparatus having means for storing data as a plurality of data areas on a storage medium, the medium requiring erasure of any data previously stored on a data area before further data is written to that area,

   comprising the step of:

   storing, on the medium, a data item associated with one or more of the data areas, indicating whether any previously recorded data has already been erased from that area or areas.

3. A data storage medium requiring erasure of any data previously stored on a data area before further data is written to that area,

   characterised by:

   a data item stored on the medium and associated with one or more of the data areas, indicating whether any previously recorded data has already been erased from that area or areas.

4. A record medium having a magneto-optic recording layer which requires erasing previously recorded data before recording new data in any given recording area of the record medium,

   the medium having a plurality of substantially circular addressable tracks, each track having at least an index mark, the addressing within each track being measured in a direction of rotation of motion of the record medium such that signals recorded in the respective tracks can be addressed by measuring displacement from the index marks in said direction, respectively;

   in each track having recorded data signals, each said track having said data signals in at least two adjacent data areas of the track separated by a control area, one of the blocks being adjacent said index mark and all other blocks in the respective track being spaced from each adjacent block by a one of said control areas and being in seriatim from the respective index mark from sail one block in said one direction;

   comprising:

   an erase indicator in each of said control areas, all of said erase indicators indicating a non-erased state of the track, excepting the erase indicator, disposed between the penultimate and ultimate blocks of signals as measured in said direction of motion from said respective index mark which indicates said non-erased state if the area of the track further from said index mark than said ultimate record is not erased and indicates an erased condition if said area further from said index mark is erased.

5. A record medium as claimed in claim 4, in which: one of said tracks has only said penultimate and ultimate blocks; said penultimate block being a home address block and said ultimate block being a record zero block.

6. A record medium as claimed in claim 4, in which: said index mark is an embossed radial line and each of said control areas including signal block address information recorded in said magneto-optic recording layer.

7. A method of recording signals in a magneto-optic recording medium having a plurality of addressable signal-storing tracks and each track having a permanent index mark for signifying a reference position in each of the respective tracks, said signals being recordable in the respective tracks in a first direction of motion along any of said tracks, any position in any of said tracks displaced from said index marks being in a more remote addressable position in the tracks, respectively, including the steps of:
   selecting one of the tracks to record signals therein;
   erasing the track in preparation for recording;
   recording a home address record as a separate signal block immediately adjacent said index marks;
   then, recording an erase indicator indicating the track is erased in an area immediately adjacent said home address record; and then recording a record zero.

8. A method as claimed in claim 7 further including the steps of:
   in said selected track, serially recording records 2 through N, where N is a positive integer, beginning with recording record 2 immediately adjacent said record zero; and
   rewriting the erase indicator between said home address record and record zero to indicate a non-erased state of the track and writing an erase indicator between each of said records 2 through N which also indicate an non-erased state excepting between records N-1 and N whereat writing an erase indicator indicating an erased state.

9. A method as claimed in claim 8 further including the steps of:

adding additional records to said selected track, changing said erase indicator between records N-1 and N to indicate a non-erased state and writing erase indicators between each successively written record which indicate a non-erased state excepting between the penultimate and ultimate recorded records between which recording an erase indicator indicating an erased state.

10. A method as claimed in claim 9 further including the steps of:
   selecting an erase indicator having an erased state to indicate a non-erased track and selecting an erase indicator which is not erased to indicate an erased track; and
   when recording additional records in the selected track, while erasing the erase indicator sensing the erase indicator to verify that the track area more remote from the index mark than the ultimate record is erased, if the sensed erase indicator indicates an erased condition, recording the additional records, else erase the track from beyond the ultimate record in a first pass of the selected track and then record the additional records in a second pass of the selected track.

11. A method as claimed in claim 7 further including the steps of:
   recording additional records in said selected track without recording erase indicators between said recorded additional records.

12. A method as claimed in claim 11 further including the steps of:
   reallocating said selected track without erasing any previous recording; and
   changing said erase indicator to indicate a non-erased track.

13. A method as claimed in claim 7 further including the steps of:
   selecting an erase indicator having a predetermined signal pattern for indicating an erased condition and selecting an erase indicator having other than said predetermined signal pattern for indicating an non-erased condition.

14. A method as claimed in claim 13 further including the steps of:
   recording said erase indicator between each of any records in the selected track such that the erase indicators recorded between all records which are not penultimate and ultimate records displaced from said index mark indicate a non-erased state irrespective of any prior erasing of the selected track and recording an erase indicator between said penultimate and ultimate records which indicates the actual erased state of the selected track between the ultimate record and the index mark when moving in said first direction along the track.

15. A data storage system having means for holding and transporting a storage medium and data means for recording data onto and reading data from the storage medium, comprising:

first means for supplying records of data to the data means for recording on the storage medium;

second means for supplying erase indicators to the data means for being recorded between two respective predetermined ones of the data blocks supplied by said first means for respectively indicating that a predetermined portion less than all of the record medium is erased, such portion being physically remote on the storage medium from the location at which the erase indicators are recorded on the medium, respectively; and

erase control means in the first means coupled to the second means for actuating the data means to record the erase indicators between said predetermined data blocks on the medium.

16. A data storage system as claimed in claim 15 in which:

said data means has erase means operative when reading data from the storage medium being responsive to any of said erase indicators being read and that indicate that said predetermined portion of the storage medium is not erased to erase such predetermined portion.

17. A data storage system as claimed in claim 16 in which:

said storage medium has a plurality of addressable tracks for receiving and storing a plurality of said data blocks and said erase indicators;

said data means scans each of said tracks in one direction of scanning along the respective track length for successively scanning data records on the track in a same sequence;

said erase control means is operative to signify to said data means for any of said tracks to record a one of said erase indicators between each of two serially adjacent data blocks in each such track which indicates a non-erased state in the track portion beyond a next data block to be encountered in such track includes a portion of such track which is either known to include recorded data or the erasure status is unknown and to record a one of the erase indicators between the penultimate and ultimate data records in such track only when it is known that the portion of the track beyond the ultimate record is erased such that only one of the erase indicators in each of said tracks indicates an erased predetermined portion of the storage medium.

*Fig.1*

*Fig.2*

*Fig.4*

*Fig.3*

*Fig.5*

APPEND
RECORD(S) 70

FIND
RECORD N-1 71
SENSE E

E 72 =0 → SKIP
RECORD N-1 80

=1

SET E=0 73

SKIP N-1 74

ONE
RECORD 75 NO →

YES

E=1 78

WRITE LAST
RECORD 79

ERASE EOT 81

FIND
RECORD N-1 82

WRITE
RECORD &
SET E=0 76

NEXT
RECORD
LAST
ONE 77

NO

YES

*Fig. 6*

90 91 92 93 94 95 89
HA | E+E | RO |
| HA | E+E | RO |
97 98 99 100 101 102

*Fig. 7*

STATIONARY
ERASE BEAM

TRACK

113 114 115 111
116 15

MAGNETIZED
AREA TO BE ERASED

112

*Fig. 8*

10